# EUROPEAN PATENT SPECIFICATION

(11) **EP 1 865 031 B1**
(45) Date of publication and mention of the grant of the patent: **02.07.2008**
(21) Application number: 06011925.2
(22) Date of filing: 09.06.2006
(51) Int. Cl.: C09C 1/00

(54) **Effect pigments comprising glass flakes having a content of titanium oxide**
effektpigmente mit titanoxyd enthaltenden glasschuppen
pigments à effet comprenant des paillettes de verre contenant de l'oxyde de titane

(43) Date of publication of application: 12.12.2007
(73) Proprietor: Eckart GmbH, 90763 Fürth (DE)
(72) Inventor: Schumacher, Dirk, Dr., D-91257 Pegnitz (DE); Kaupp, Günter, Dr., D-91284 Neuhaus (DE); Schmidt, Ulrich, Dr., D-91217 Hersbruck (DE)
(74) Representative: Walcher, Armin

(56) References cited:
- EP-A- 1 340 715
- DE-A1-4102004 039 55
- US-A1- 2 863 783

## Description

The present invention is directed to an effect pigment comprising glass flakes with a coating, said coating comprising at least one layer of at least one high refractive material, said material having a refractive index of at least 1.8. The invention is further directed to the use of these effect pigments as well as to formulations and preparations containing said effect pigments. The invention is also directed to the use of glass flakes having a content of titanium oxide for the production of effect pigments. Moreover, the invention relates to a method of producing these effect pigments.

Recently, glass flakes have received an increased attention as a substrate for effect pigments, particularly pearlescent pigments. Glass flakes or glass platelets have a very smooth surface and rather uniform thickness, compared to mica substrates traditionally used as a substrate in pearlescent pigments. The smooth surface of these glass flakes allows producing effect pigments having a likewise smooth surface after coating with metal oxides. Together with the uniform thickness of the glass flakes this leads to improved optical properties such as stronger chroma and a higher colour purity.

US 3,331,699 discloses a pigment composition consisting essentially of glass flakes on which a very thin nucleating surface of a metal oxide compound is deposited at first. Subsequently, high refractive metal oxides are precipitated on said thin nucleating surface. The nucleating layer can be comprised of tin oxide or aluminium oxide hydroxide and is necessary to improve the adhesion of the subsequently applied metal oxide layers. As shown in WO 02/090448, the effect pigments obtained according to the teaching of US 3,331,699 are poor in quality with respect to today's requirements and expectations.

US 2,863,783 discloses the utilization of platelets or lamellae of glass in nacreous compositions. A glass lamellae is described with a content of TiO₂ of 50.4 % and a refractive index of 1.80. Such a composition has a refractive index to high to be used as a substrate material of pearlescent pigments. Furthermore, it has a very high softening point and is very expensive due to the high content of TiO₂.

JP 7-246366 discloses pearlescent pigments on the basis of C glass flakes coated alternately with layers of titanium dioxide and silica. Pursuant to the teaching of JP 7-246366 tin oxide is also used to improve the adhesion of the layer of TiO₂.

EP 0 912 640 B1 also discloses a pearlescent pigment comprising flakes of C glass having a first coating comprising iron oxide or rutile titanium dioxide thereon. Pursuant to the teaching of EP 0 912 640 B1 it is not possible to obtain pearlescent pigments having a high quality on the basis of flakes of A glass or E glass coated with metal oxide. The skilled person reads from EP 0 912 640 B1 that flakes of C glass are the only glass flakes which allow to produce high quality effect pigments. Before applying a layer of TiO₂ an intermediate layer of tin oxide, i.e. SnO₂, is coated on the surface of the glass flake to improve adhesion of said layer of TiO₂ on the surface of the glass flake.

The effect pigments disclosed in this patent have a reduced mechanical stability which can lead to delamination of metal oxide layers from the C glass substrate during routine handling of these effect pigments.

WO 02/090448 A2 likewise discloses effect pigments on the basis of glass flakes with a thickness below 1 µm and which are coated with one or more layers with a high and/or low refractive index. Pursuant to the teaching of WO 02/090448 A2 quartz glass is the preferred glass as a substrate for effect pigments. Furthermore, any other glass composition having a softening point of ≥ 800 °C like e.g. Schott Duran or Supremax types can be used.

A glass type having a softening point of more than 800 °C, disadvantageously, increases the costs for producing the glass flakes. As effect pigments are used in large amounts in printing inks, coating compositions, plastics, etc., it is desired to lower the costs for production of glass flakes in order to be able to economically produce effect pigments.

In view of the drawbacks encountered in the prior art it is desired to provide effect pigments on the basis of glass flakes which can be economically produced and which allow to produce effect pigments with a higher quality than known in the state of the art. The effect pigments should have an improved mechanical stability and need less precursor material of high refractive index material in order to produce an effect pigment with a given target colour tone.

Furthermore it is desirable to use glass flakes which can be produced economically with low energy costs.

The object underlying the present invention is solved by providing an effect pigment comprising a substrate consisting of glass flakes with a coating, said coating comprising at least one layer of at least one high refractive material, said material having a refractive index of at least 1.8, wherein
said glass flakes comprise the following composition:
50 - 65 wt.-% silicium oxide, preferably SiO₂,
10 - 18 wt.-% aluminium oxide, preferably Al₂O₃,
10 - 28 wt.-% calcium oxide, preferably CaO,
0.05 - 15 wt.-%titanium oxide, preferably TiO₂,
based on the weight of said glass flakes.

Preferred embodiments are specified in dependent claims 2 through 17.

Another object of the present invention is solved by a method of producing an effect pigment, comprising the steps:
(a) coating glass flakes comprising the following composition:
   50 - 65 wt.-% silicium oxide, preferably SiO₂,
   10 - 18 wt.-% aluminium oxide, preferably Al₂O₃,
   10 - 28 wt.-% calcium oxide, preferably CaO,
   0.05 - 15 wt.-% titanium oxide, preferably TiO₂,
   based on the weight of said glass flakes,
   with at least one layer of high refractive material, said material having a refractive index of at least 1,8,
(b) optionally calcining said layered glass flakes obtained by step (a).

The inventors have surprisingly found that a glass composition having a content of titanium oxide of 0.05 wt.-% to 15 wt.-%, based on the weight of the glass flakes, increases the adhesion of subsequently applied layer(s) of high refractive material. Furthermore the process of depositing the high refractive index material on the glass flake is performed more effectively.

Although not wishing to be bound by theory, it is currently believed that the titanium oxide, preferably titanium dioxide, possibly modifies the surface structure of the glass flakes. This modified surface structure of the glass flakes obviously leads to an improved adhesion of subsequently applied layer(s) of high refractive material. The high refractive material is preferably an inorganic material, further preferred an inorganic oxidic and/or sulfidic material.

Mechanical stability or the abrasion resistance properties of effect pigments are of essential importance for all applications.

On mechanical stress, e.g., exhibited for example by shear forces during application of the pigment in a cosmetic formulation on the skin, during printing or manufacturing of pigment preparations or master batches, or during pumping of effect pigment dispersions in circulation lines, partial or full delamination of metal oxide layer(s) is often observed in the prior art and represents a serious problem.

Shear forces are usually applied either during mixing and dispersing of effect pigments or during line circulation or during application itself, e.g., nozzle spraying. Also when recycling effect pigments after application - such as recycling of left-over of powder lacquer - a sufficient mechanical stability is a requirement for the re-use of the recycled effect pigments. If the effect pigments do not have a sufficient mechanical stability, the pigments are damaged and can not be re-used for high quality applications.

Therefore, the high refractive material such as metal oxide layer(s) must adhere firmly to the substrate in order to prevent rupture or stripping of the high refractive material such as metal oxide layer(s) in the later application by shear forces induced, e.g., during extrusion of plastics containing effect pigments. A limited adhesion of the metal oxide layer(s) on a glass flake resulting from an inadequate mechanical stability of the pearlescent pigment results in a significant loss of gloss and of the pearlescent effect. Even a small portion of damaged pigment particles might cause a significant deterioration of colour properties and of brilliance in the final application of the pigment, for example in automotive coatings.

Surprisingly, the problems existing in the prior art can be overcome by incorporation of titanium oxide, preferably titanium dioxide, into glass compositions used in the production of effect pigments. The at least one layer of high refractive material of the effect pigments of the present invention is firmly adhered to the glass flake containing titanium oxide, preferably titanium dioxide. The content of titanium oxide is in a range of 0.05 to 15 wt.-%, based on the weight of the glass flakes.

Preferably the glass composition of said glass flakes comprises a content of titanium oxide of at least 0.5 wt.-%, further preferably at least 1 wt.-%, based on the weight of said glass flakes. Furthermore, it is preferred that the glass composition of the glass flakes comprises a content of titanium oxide of at least 2 wt.-%, further preferred more than 4 wt.-%, for example 4.1 wt.-%. According to another embodiment of the invention the glass composition of said glass flakes comprises at least 5 wt.-% based on the weight of said glass flakes having a content of titanium oxide.
Below a content of 0.05 wt.-% TiO₂ the favourable adhesion properties are no longer observed.

A content above 15 wt.-% of TiO₂ renders the refractive index of the glass flakes to high to be useful as substrate for effect pigments. The difference in the index of refraction of the substrate and the at least one high refractive index layer must be large enough to obtain interference effects with significant quality. The said difference in the index of refraction is at least 0.6, preferably 0.8 and more preferably 1.0. Furthermore, a high content of TiO₂ increases the softening point of the glass flakes which is very undesirable.

Preferably the content of TiO₂ in the glassflakes is below 12 wt.-% and more preferably below 10 wt.-%. The most preferable content of TiO₂ of the glassflakes is below 8 wt.-%.

The inventive effect pigments comprise a glass substrate comprising as further components 50 - 65 wt.-% silicium oxide, preferably SiO₂, 10-18 wt.-% aluminium oxide, preferably Al₂O₃ and 10 - 28 wt.-% calcium oxide, preferably CaO.

Usually, glass flakes are produced from larger glass plates which are subsequently chopped or comminuted to the desired size of the glass flakes. Surprisingly the inventive glass compositions specified above can be broken down to glass flakes of a quite regular shape particular useful as a substrate for the production of effect pigments. With glass flakes of the inventive composition it has been found that after milling the glass flakes their shapes are much improved compared to - for example - C-glass.

It is assumed, that the high content of aluminium oxide, preferably Al₂O₃, and calcium oxide, preferably CaO, increase the scratch hardness of the glass. Therefore, during milling, the glass flakes are broken in a very defined way leading to glass flakes with sharp and regular edges.

Furthermore, these favourable mechanical properties of the glass compositions lead to reduced chopping times and therefore improve the efficiency and economical production of desired glass flake fractions.

Preferably, the said glass composition comprises a content of 52 - 62 wt.-% of silicium oxide, preferably SiO₂, based on the weight of said glass flake.

Preferably, the said glass composition comprises a content of 12 - 16 wt.-% of aluminium oxide, preferably Al₂O₃, based on the weight of said glass flake.

Preferably, the said glass composition comprises a content of 18 - 25 wt.-% of calcium oxide, preferably CaO, based on the weight of said glass flake. The high content of CaO also tends to decrease the softening point of the glass flakes.

In a further preferred embodiment of the invention the said glass composition comprises the following further components:
0 to 3 wt.-%, preferably 0 to 1 wt.-%, sodium oxide and potassium oxide, preferably Na₂O+K₂O,
0 to 6 wt.-%, preferably 1.0 to 3.0 wt.-%, magnesium oxide, preferably MgO
0 to < 1 wt.-%, preferably 0 to 0.5 wt.-%, zinc oxide, preferably ZnO
0 to 1 wt.-%, preferably 0.1 to 0.4 wt.-%, iron oxide, preferably FeO and/OR Fe₂O₃.

This composition of oxides together with the main components mentioned can also be designated as E-Glass. The composition of E glass may contain, besides titanium oxide, further minor components, which do not substantially effect the properties of said E glass, such as the softening point, the scratch hardness and the refractive index.

The sum of all components of the above glass compositions, including those components not mentioned above, such as TiO₂, do amount in total each to 100 wt.-%.

It was surprisingly found that especially E-glass has much better regular shapes and even edges compared to C-glass. Therefore, E-glass compositions are preferred in this invention. Without depending on theories this phenomenon might be due to the higher scratch hardness of E-glass compared to C-glass.

In a further preferred embodiment of the invention the said glass composition has a softening point below 800 °C. Such a glass can be produced with less energy costs and hence less total costs. E glass containing titanium oxide in an amount of 0.1 wt.-% to 15 wt.-% based on the weight of the glass flakes, preferably have a softening point below 800 °C. Pursuant to a preferred embodiment of the invention the softening point of the glass flakes containing titanium oxide is in a range of 600 °C to less than 800 °C, preferably from 650 °C to 780 °C, further preferred from 680 °C to 750 °C.

The aforementioned compositions of E glass have been proven to be particularly useful for the present invention. As E glass had been considered as a glass of minor quality for use as a substrate for effect pigments in the prior art, as set forth, for example, in EP 0 912 640 B1, it is particularly surprising that E glass having a content of titanium oxide, preferably TiO₂, is a particular useful substrate for the production of high quality effect pigments with superior mechanical properties.

Preferably, the glass flakes containing titanium oxide used in the present invention have a refractive index of less than 1.8. Most preferably the refractive index of the glass flakes is within a range of 1.40 to 1.80, more preferred in a range of 1.45 to 1.7 and mostly preferred in a range of 1.50 to 1.60.

Pursuant to another preferred embodiment of the invention, the difference between the refractive index of the glass flake containing titanium oxide and the subsequently applied layer or layers of high refractive material(s) is at least 0.6, more preferably at least 1.0 and further preferred at least 1.5. According to another preferred embodiment, the difference of the refractive index between the glass flakes substrate and the subsequently applied layer(s) of high refractive material(s) is in a range of 0.9 to 1.3.

When applying titanium dioxide, having a refractive index of 2.7, as a high refractive material on a glass flake having a content of titanium dioxide as specified in claim 1, it is possible to obtain a difference of refractive index between said glass flake and the subsequently titanium dioxide layer in a range of 0.9 up to 1.3, preferably of 1.0 to 1.2.

According to an embodiment of the invention one or more layers of high refractive material(s), such as metal oxide(s) or metal sulfide(s), can be coated directly on each other.

For example, a layer of TiO₂ can be directly applied on the surface of the glass flakes containing TiO₂, followed by a subsequent layer of Fe₂O₃, or vice versa. It is not particularly necessary to first apply an layer of, for example, tin oxide before coating the glass flakes with TiO₂. Due to the content of TiO₂ in the glass flakes itself a very effective further coating combined with mechanical stability of the TiO₂-layer has been surprisingly observed. It is, of course, also possible to directly apply a layer composed of a mixture of various high refractive materials such as metal sulfides or metal oxides. A particular useful mixture of metal oxides is a mixture of TiO₂ and Fe₂O₃.

Pursuant to another embodiment of the invention the effect pigment comprises a plurality of layers of low refractive and high refractive materials, such as metal oxide(s) and/or metal sulfide(s). According to another embodiment of the invention said layers of low refractive and high refractive materials are alternately arranged on each other.

Especially preferred are alternating layers of high refractive materials with low refractive materials. Such pearlescent pigments are known to exhibit especially strong interference colours. Pearlescent pigments with such alternating layers are, for example, known from the DE 196 18 566 A1, DE 196 38 708, JP 7-246366, EP 1 025 168 A1 or EP 0 753 545 A2.

Irrespective of the fact that a large number of high refractive materials, such as metal oxides and/or metal sulfides, if desired in an alternate fashion with low refractive material(s), e.g., low refractive metal oxides, can be principally applied, surprisingly, effect pigments having a high gloss and a high chroma can be obtained by coating only one or two layers of high refractive metal oxide on the glass flakes. Therefore, the effect pigments of the present invention have a simplified structure

The high refractive materials, for example metal oxide(s), metal sulfide(s), have preferably a refractive index of at least 2.0, further preferred of at least 2.2. Pursuant to another embodiment of the invention the refractive index of the high refractive material(s) is at least 2.4. The refractive index can be up to 2.7, 2.9 or 3,5.

Although not necessary, a layer of tin oxide and/or aluminium oxide can be additionally coated between the glass flake surface and a subsequent layer of high refractive material. An intermediate layer of tin oxide and/or aluminium oxide may further increase the adhesion of subsequent layer(s) of high refractive material(s) on the glass flakes.

According to another embodiment of the invention the layer of high refractive material, e.g. metal oxide and/or metal sulfide, directly applied to the surface of the glass flakes can be doped with tin oxide and/or aluminium oxide. Such doping with tin oxide and/or aluminium oxide may also increase the adhesion between the high refractive material layer on the surface of the glass flakes. When applying an intermediate layer of aluminium oxide or when using aluminium oxide as a doping agent, it is preferred to use aluminium oxide in the boehmite modification.

According to a preferred embodiment of the invention the high refractive material is selected from the group consisting of metal chalcogenides, particularly metal oxides, metal suboxides and metal sulfides, metal oxyhalides, metal nitrides, metal carbides, semitransparent metals and mixtures thereof.

Preferably said high refractive material is preferably selected from the group of metal oxides consisting of titanium dioxide, iron oxides, e.g. hematite, magnetite, goethite, chromium oxide, copper oxide, zinc oxide, tin oxide, vanadium oxide, nickel oxide, antimony oxide, lead oxide, silver oxide, molybdenum oxide, tungsten oxide, zirconium oxide, suboxides and mixtures thereof.

Pursuant to another embodiment of the invention said high refractive material is selected from the group of metal sulfides consisting of titanium sulfide, iron sulfide, chromium sulfide, copper sulfide, zinc sulfide, tin sulfide, nickel sulfide, vanadium sulfide, cobalt sulfide" antimony sulfide, lead sulfide, silver sulfide, lanthanum sulfides, preferably cerium sulphide, molybdenum sulfide, tungsten sulfide, zirconium sulfide, subsulfides and mixtures thereof.

Pursuant to another embodiment of the invention said high refractive material is selected from the group of semitransparent metals consisting of aluminium, chromium, silver, gold, copper, titanium, nickel, zinc and mixtures and alloys of these metals. The term "semitransparent" means a transparency of 10 to 90 %, preferably of 30 to 70 % and most preferably of 40 to 60 %, respectively. Thin metal layers of these transparencies are capable to give rise to interference effects with the underlying glass flake substrate. The thickness of these semitransparent metal layers is preferably in a range of between 2 nm and 20 nm, preferably between 3 nm and 15 nm.

The metal layers can be deposited by known methods such as CVD-, PVD-methods or by electroless plating.

Furthermore, it is preferred that the low refractive material is a metal oxide which can be selected from the group consisting of silica, silica hydrate, silicon oxide hydroxide, silicon oxide hydroxide hydrate, alumina, alumina hydrate, aluminium oxide hydroxide, aluminium oxide hydroxide hydrate, and mixtures thereof.

Examples of suitable metal oxides having a refractive index of more than 1.8 are TiO₂, Fe₂O₃, TiFe₂O₅, Ti-suboxides, Fe₃O₄, Cr₂O₃, ZrO₂, ZnO, SnO₂, Sn (Sb)O₂ or mixtures thereof.

The TiO₂ layer can be in the rutile or anatase modification, preferably the TiO₂ layer is rutile. Especially preferred are glass flakes coated withTiO₂ and/or Fe₂O₃.

Pursuant to a preferred embodiment the glass flakes having preferably the composition of the above-mentioned E glass are coated preferably with one or more layers of metal oxide selected preferably from the group consisting of TiO₂, Fe₂O₃ and mixtures thereof.

Depending on the thickness of the layer(s) of TiO₂ and/or Fe₂O₃ a wide range of colour effects can be produced.

Pursuant to another embodiment of the invention, the one or more metal oxide layers of titanium dioxide is/are in the rutile modification. Rutile has a higher index of refraction compared to anatase and is less photoactive.

If the effect pigments of this invention containing TiO₂ in the high refractive index coating are used in out-door applications such as automotive applications a subsequent protection coating, e.g., a layer of silicon oxide and/or cerium oxide is preferably applied to suppress the photoactivity, if any. The protection coating can be composed of a first layer of silicon oxide and a second layer of cerium oxide and vice versa, wherein the latter arrangement of layers is particularly preferred.

Glass flakes used in the present invention have a thickness preferably in the range of 0.05 to 10 µm, further preferably of 0.1 µm to 2.0 µm. Pursuant to another embodiment of the invention the thickness of the glass flakes is in a range of 0.15 µm to 1.0 µm, more preferably of 0.2 µm to 0.35 µm.
Very thin glass flakes are preferred, because very brilliant colour effects can be achieved with them.

The average particle size of the glass flakes used in the present invention is preferably in the range of 1 to 1000 µm, more preferably in the range of 5 to 500 µm. Preferred glass flakes have an average particle size in the range of 10 to 200 µm.

The aspect ratio of the glass flakes is preferably in the range of 20 to 10,000, preferably in the range of 200 to 3,000. Pursuant to another embodiment of the invention, the aspect ratio is in the range of 300 to 1,500.

The thickness of a layer of the high refractive material, e.g., a metal oxide layer such as a TiO₂ layer or a Fe₂O₃ layer, is usually within a range of 0.1 nm to 1000 nm, preferably in a range of 5 nm to 500 nm, more preferably in a range of 10 nm to 300 nm. The thickness of the layer of high refractive material such as metal oxide(s) can also be in the range of 25 nm to 100 nm. The aforementioned values of thickness do apply likewise for metal sulfide layer(s).

Particularly preferred effect pigments of the present invention are glass flakes comprised a composition according to claim 1 with respect to the content of SiO₂, Al₂O₃ and CaO and having a content of titanium oxide in the range of 0.1 to 10 wt.-%, preferably 4.5 to 8 wt.-%, based each on the weight of the glass flake without further layers and comprising or consisting of coatings with the specified high refractive material:
glass flake + TiO₂ layer with TiO₂ being in the rutile modification
glass flake + TiO₂ layer with TiO₂ being in the anatase modification
glass flake + Fe₂O₃ layer
glass flake + TiO₂/Fe₂O₃ layer with TiO₂ being in the rutile modification
glass flake + TiO₂/Fe₂O₃ layer with TiO₂ being in the anatase modification
glass flake + TiO₂ layer + Fe₂O₃ layer with TiO₂ being in the rutile modification
glass flake + TiO₂ layer + Fe₂O₃ layer with TiO₂ being in the anatase modification
glass flake + Fe₂O₃ layer + TiO₂ layer with TiO₂ being in the rutile modification
glass flake + Fe₂O₃ layer + TiO₂ layer with TiO₂ being in the anatase modification
glass flake + TiFe₂O₅ layer
glass flake + Cr₂O₃ layer
glass flake + ZrO₂ layer
glass flake + Sn (Sb)O₂ layer
glass flake + BiOCl layer
glass flake + Al₂O₃ layer + TiO₂ layer with TiO₂ being in the rutile modification
glass flake + SnO₂ layer + TiO₂ layer with TiO₂ being in the rutile modification
glass flake + Al₂O₃/TiO₂ layer with TiO₂ being in the rutile modification
glass flake + SnO₂/TiO₂ layer with TiO₂ being in the rutile modification
glass flake + Ce₂S₃ layer
glass flake + MoS₂ layer

If the high refractive index material comprises TiO₂ either alone or in admixture with another compound, such as TiO₂/Fe₂O₃, a subsequent layer of SiO₂ and/or cerium oxide is preferably applied if the photocatalytic activity of the pearlescent pigment is to be isolated from the surrounding. Such protective coatings are described in the DE 10 2004 041 592 A1 and the 10 2004 041 586 A1. In addition an anti-yellowing treatment, especially useful for plastic applications, can be applied to the coated glassflakes. Such coatings are described in the DE 3824809, in the DE 4429797 and the EP 520313.

It is also possible to additionally include colouring matters such as dyes, colourants, etc. into the layer(s) of high refractive material, such as a metal oxide layer, or a layer of low refractive material, such as a layer of SiO₂ or Al₂O₃, or as a separate layer onto the surface of the coating containing the at least one layer of high refractive material. Such colouring matter can be, for example, carmine, Prussian blue (ferric cyanoferrate (II)), carbon black, copper phthalocyanines, diketo pyrrolo pyrrolidones, chinacridones, indolines, isoindolines, azopigments, anthrachinones, FD&C dyes or FD&C lakes.

The surface of the effect pigments of the present invention may also be organic-chemically modified. Such an organic-chemical surface modification may render the effect pigments a leafing behaviour or a non-leafing behaviour.

Furthermore, such an organic-chemical surface modification may introduce chemically reactive groups which allow a chemical reaction with binding agents of a coating, paint, ink, printing ink, etc.. By chemically reacting the surface coupled reactive groups with the binding agent, the light and weather stability of the resulting coating is strongly improved. Such organic-chemical surface modifications are known from WO 99/57204 where reactive orientation auxiliary agents are coupled to the effect pigment surface.

Particular useful reactive orientation auxiliary agents or coupling agents to be coupled to the surface of the effect pigments are the following organofunctional silanes having useful organofunctional groups. The silanes marketed by Degussa, Rheinfelden, Germany, under the trade name Dynasylan^{®} or by OSi Specialties under the trade name Silquest® are particularly useful. Furthermore, the organosilanes marketed by Wacker AG, München, Germany, under the trade name GENIOSIL^{®}, especially the so called α-silanes, can be likewise used.

The following compounds are particularly preferred:
3-Methacryloxypropyl trimethoxy silane (Dynasylan MEMO, Silquest A-174NT), vinyl tri(m)ethoxy silane (Dynasylan VTMO bzw. VTEO, Silquest A-151 bzw. A-171), 3-mercaptopropyl tri(m)ethoxy silane (Dynasylan MTMO oder 3201; Silquest A-189), 3-glycidoxypropyl trimethoxy silane (Dynasylan GLYMO, Silquest A-187), tris-(3-trimethoxysilyl propyl) isocyanurate (Silquest Y-11597), gamma-mercaptopropyl trimethoxy silane (Silquest A-189), bis-(3-triethoxysilyl propyl) polysulfide (Silquest A-1289), bis-(3-triethoxysilyl) disulfide (Silquest A-1589), beta-(3,4-epoxycyclohexyl) ethyl trimethoxy silane (Silquest A-186), bis (triethoxysilyl) ethane (Silquest Y-9805), gamma-isocyanato propyltrimethoxy silane (Silquest A-Link 35, GENIOSIL GF40), (methacryloxy methyl) tri(m)ethoxy silane (GENIOSIL XL 33, XL 36), (methacryloxy methyl) (m)ethyldimethoxy silane (GENIOSIL XL 32, XL 34), isocyanato methyl) trimethoxy silane (GENIOSIL XL 43), (isocyanato methyl) methyldimethoxy silane (GENIOSIL XL 42), (isocyanato methyl) trimethoxy silane (GENIOSIL XL 43) 3-(triethoxysilyl) propyl succinic anhydride (GENIOSIL GF 20) or mixtures thereof.

According to another preferred embodiment of the invention the effect pigments can be coated, preferably in addition to the aforementioned silanes, with at least one amino functional silane. The amino function is an organofunctional group, can undergo chemical interactions with chemical groups of most of the binding agents. The interaction can be covalent bonds, e.g. with isocyanato groups of binding agents, hydrogen bonds with OH or COOH groups of binding agents, or ionic interactions. An amino function is a useful chemical function for creating chemical bonds with a great variety of binding agents.

### The following compounds are particularly preferred:

Aminopropyl trimethoxy silane (Dynasylan AMMO; Silquest A-1110), aminopropyl triethoxy silane (Dynasylan AMEO) or N-(2-aminoethyl)-3-aminopropyl trimethoxy silane (Dynasylan DAMO, Silquest A-1120) or N-(2-aminoethyl)-3-aminopropyl triethoxy silane, triamino-functional trimethoxy silane (Silquest A-1130), bis-(gamma-trimethoxy silylpropyl) amine (Silquest A-1170), N-ethyl-gamma-amino isobutyl trimethoxy silane (Silquest A-Link 15), N-phenyl-gamma-aminopropyl trimethoxy silane (Silquest Y-9669), 4-amino-3,3-dimethylbutyl trimethoxy silane (Silquest Y-11637), N-cyclohexyl aminomethyl methyldiethoxy silane (GENIOSIL XL 924), (N-cyclohexyl aminomethyl) triethoxy silane (GENIOSIL XL 926), (N-phenyl aminomethyl) trimethoxy silane (GENIOSIL XL 973) or mixtures thereof.

The effect pigments of the present invention are characterised by a particular mechanical stability or abrasion resistance. As set forth above the effect pigments are often exposed to shear forces, for example, when pumping the effect pigments through circulation lines or when mixing the pigments into paints, inks, plastics, etc. or during application of the effect pigments, e.g. nozzle spraying or during recycling of used effect pigments.

The effect pigments of the present invention are advantageously useful for many purposes, such as for colouring of plastics, glasses, ceramic products, agriculture foils, decorative cosmetic formulations, in particular coatings, especially automotive coatings, and inks, including printing inks.

The effect pigments of the present invention can be used in all customary printing processes, for example offset printing, intaglio printing, bronze printing, flexographic printing, etc.. Furthermore the effect pigments of the present invention can be used as functional pigments like conductive pigments, as magnetic pigments or to make media laser-markable. The media can be, for example, plastics, board products or papers. Furthermore, the effect pigments of the present invention can be used in cosmetic formulations such as nail polish, lip stick, make-up, hair care products, skin formulations, mascaras, eye-shadow, eyeliner, shower gel, shampoos, rouge, parfum, Eau de Toilette, cosmetical powders (pressed or loose), tooth paste or Tattoo formulations.

The effect pigments of the present invention are also advantageously useful for the above-mentioned applications in admixture with filler pigments, transparent pigments, or hiding white, coloured, black organic and/or inorganic pigments. The effect pigments of the present invention can also be used in admixture with conventional transparent, coloured or black pearlescent pigments based on metal oxide coated mica, TiO₂ flakes, SiO₂ flakes or Al₂O₃ flakes and coated or uncoated metal pigments, BiOCl pigments, platelet shaped iron oxides, or graphite flakes.

The effect pigments of the present invention are particularly suited to be mixed with conventional effect pigments, such as metal effect pigments or pearlescent pigments, to produce particularly shiny colours which can have an effect of deepness. The effect pigments pursuant to the present invention are particularly durable, high gloss and high chroma pearlescent pigments. The metal effect pigments comprise for example, metal effect pigments made from aluminium, brass, copper or iron or alloys thereof.

Additionally, the inventive pigment mixtures can contain organic or inorganic colourants, thixotropy agents, wetting agents, dispersing agents, water, and/or organic solvent or solvent mixtures, etc..

The effect pigments of the present invention can be formulated as a free flowing pigment powder. Preferably, the pigment powder is a low or non-dusting powder of the effect pigments of the present invention.

The effect pigments of the present invention can also be formulated, for example, together with binding agents in the form of granules, pellets, tablets or in a pasty consistency.

The pigment mixtures of the invention are simple and easy to handle. The pigment mixtures can be incorporated into any system in which it is to be used by simple mixing. Laborious milling and dispersing procedures for the pigments are not necessary.

The effect pigments of the invention can be used for pigmenting and/or coating of materials, printing inks, plastics, agricultural films, button pastes, for the coating of seed, for the colouring of food, coatings of foods, medicaments or cosmetic formulations.

The concentration of the effect pigments of the invention in a system in which it is to be used for pigmenting or colouring is generally between 0.01 and 50 % by weight, preferably between 0.1 and 5 % by weight, based on the overall solids content of the system. This concentration is generally dependent on the specific application.

Plastics comprising the pigment mixture of the invention in amounts of 0.1 to 50 % by weight, in particular from 0.5 to 7 % by weight, are frequently notable for a particular brilliance, based on the weight of said pigmented plastics.

In the coating sector, especially in automotive finishing, the glass flakes are employed in amounts of 0.1 to 10 % by weight, based on the weight of the pigmented coating composition.

In the pigmentation of binder systems, for example for paints and printing inks for intaglio, offset or screen printing, the pigment is incorporated into the printing ink in amounts of 2-50 % by weight, preferably 5-30 % by weight and in particular 8-15 % by weight, based on the weight of the pigmented printing ink, paint, etc..

The invention likewise provides pigment preparations comprising effect pigments of the present invention, binders and, if desired, additives, the said preparations being in the form of substantially solvent-free, free-flowing granules.

Such granules can contain up to 95 % by weight of the inventive pigments wherein the remainder can be binding agent, and/or solvent and/or additives, etc.. A pigment preparation in which the glass flakes of the invention are pasted up with a binder and with water and/or an organic solvent, with or without additives, and the paste is subsequently dried and brought into a compact particulate form, e. g. granules, pellets, briquettes, a master batch or tablets, is particularly suitable as a precursor for printing inks but not limited to it.

The object underlying the present invention is also solved by a method of producing an effect pigment of any one of claims 1 to 17, comprising the steps:
(a) coating glass flakes comprising the following composition:
   50 - 65 wt.-% silicium oxide, preferably SiO₂,
   10 - 18 wt.-% aluminium oxide, preferably Al₂O₃,
   10 - 28 wt.-% calcium oxide, preferably CaO,
   0.05 - 15 wt.-% titanium oxide, preferably TiO₂, based on the weight of said glass flakes,
   with at least one layer of high refractive material, said material having a refractive index of at least 1,8,
(b) optionally calcining said layered glass flakes obtained by step (a).

Pursuant to a preferred embodiment the glass flakes are coated with at least one layer of a high refractive material by wet chemical coating, physical vapour deposition, chemical vapour deposition, or electroless plating.

The glass flakes can be coated in the same way as e.g. mica based pearlescent pigments. Coatings with a metal oxide may be accomplished by any known methods, such as hydrolysis of a metal salt by heating or alkali, which deposits hydrated metal oxide, optionally followed by calcination.

In general, the procedure can involve dispersing of the glass flakes in a suitable solvent, for example organic solvent or water or a water/organic solvent mixture, and combining that dispersion with a precursor which forms a hydrous metal oxide film coating on the flakes. The precursor can be metal salts hydrolysed and subsequently deposited on the glass flake surface.

After the glass flakes are dispersed in water and placed in an appropriate vessel, the appropriate metal salts are added. The pH of the resulting dispersion is maintained at an appropriate level during the addition of the metal salts by simultaneous feeding a suitable base, for example sodium hydroxide, to cause precipitation of the hydrous metal dioxide on the glass flakes. An aqueous acid, for example hydrochloric acid, can be used for adjusting the pH. The coated platelets can, if desired, be washed and dried before being calcined to the final pigment. Appropriate procedures are described in detail in US Patent 5,433,779 and in the German Patents 14 67 468,19 59 998, 20 09 566, 22 14 545, 22 15 191, 22 44 298, 23 13 331, 25 22 572, 31 37 808, 31 37 809, 31 51 343, 31 51 354, 31 51 355, 3211 602 and 32 53 017.

Alternatively, alkoxy metal compounds can be dispersed in an organic solvent. The hydrolysis of said alkoxy metal compounds can be started by adding water, for example in an amount of about 1 to 20 wt.-%, preferably 5 to 10 wt.-%, based on the weight of the organic solvent. After hydrolysis of the alkoxy metal compounds, a metal oxide layer is formed on the surface of the glass flakes. As organic solvent preferably alcohols such as ethanol, n-propanol or isopropanol and mixtures thereof can be used.

The effect pigments obtained by wet chemically coating are characterized in that one or more homogeneous layers are enrobing the glass flakes.

The effect pigments of the present invention can also be prepared by gas phase decomposition of volatile metal compounds (CVD, PVD) or electroless plating by procedures known in the art. When using CVD or PVD procedures the high refractive material is deposited on the upper and lower side of glass plates. After deposition of the high refractive material(s) and, if desired, of low refractive materials, the glass plates are comminuted into glass flakes. Accordingly the edges of the glass flakes are not coated.

The object underlying the present invention is further solved by the use of effect pigments of any one of claims 1 to 18 in plastics, coatings, powder coatings, paints, inks, printing inks, glasses, ceramics, agriculture foils, cosmetics, tattoo formulations, and foods.

The object of the invention is also solved by formulations and preparations containing the effect pigments of any one of claims 1 to 18. Said formulations and preparation comprises plastics, coatings, powder coatings, paints, inks, printing inks, glasses, ceramics, agriculture foils, cosmetics, tattoo formulations, and foods.

The object of the invention is likewise solved by a use of glass as described above, particularly E glass, having a content of titanium oxide in a range of 0.05 wt.-% to 15 wt.-%, based on the weight of said glass, as a substrate for effect pigments.

The invention is further illustrated by the following examples, however, without limiting the scope of invention.

### Example 1:

200 g flakes of modified E-glass with a content of 5% TiO₂ (thickness: 1 µm ; diameter: 50-150 µm) were suspended in 21 of deionised water. With vigorous stirring the suspension was heated to 80 °C. After the pH was adjusted to 1.9 with dilute HCl a first layer of SnO₂ was precipitated onto the glass flakes by feeding a solution of 3 g SnCl₄ x 5 H₂O (in 10 ml conc. HCl plus 50 ml of deionised water) into the suspension under simultaneous neutralization with 10 %NaOH over a period of about 1 h. To complete the reaction the suspension was kept stirring for another 15 min. The coating was continued by adjusting the pH to 1.6 with dilute HCl. Afterwards a TiCl₄-Solution (400 gTiCl₄/l deionised water) was added to the suspension while keeping the pH at a constant level by adding 10% NaOH. The addition of TiCl₄ was stopped when the desired interference colour (red) is observed. Afterwards the suspension was stirred for another 15 min, filtered, washed with deionised water and the filter cake was dried at 100 °C. After calcination at 750 °C for 30 min a high gloss pearlescent pigment based on glass was obtained with a red interference colour. The crystal modification of the TiO₂ was 100% rutile. The consumption of TiCl₄-solution was 214 ml. Microscopic evaluation of the coated pigments revealed a smooth and homogeneous coating of the glass flakes with TiO₂.

### Example 2 (TiO₂ coated E glass flakes without any intermediate SnO₂ layer):

200 g flakes of modified E-glass with a content of 5% TiO₂ (thickness: 1 µm ; diameter: 50-150 µm) were suspended in 21 of deionised water. With vigorous stirring the suspension was heated to 80 °C. After having adjusted the pH to 1.6 with dilute HCl 214 ml of a TiCl₄-solution (400 gTiCl₄/l) were slowly added to the reaction mixture while keeping the pH at a constant level by adding 10% NaOH. Afterwards the suspension was stirred for another 15 min, filtered, washed with deionised water and the filter cake was dried at 100 °C. After calcination at 750 °C for 30 min a pearlescent pigment based on glass with a red interference colour and a slightly reduced gloss compared to example 1 was obtained. The crystal modification of the TiO₂ is 100% anatase. Microscopic evaluation of the coated pigments revealed a smooth and homogeneous coating of the glass flakes with TiO₂.

### Comparative Example 3:

200 g flakes of standard E-glass without TiO₂ (thickness:1 µm ; diameter: 50-150 µm) were suspended in 2l of deionised water. With vigorous stirring the suspension was heated to 80 °C. After having adjusted the pH to 1.6 with dilute HCl 214 ml of a TiCl₄-solution (400 gTiCl₄/l) were slowly added to the reaction mixture while keeping the pH at a constant level by adding 10% NaOH. Afterwards the suspension was stirred for another 15 min, filtered, washed with deionised water and the filter cake is dried at 100 °C. After calcination at 750 °C for 30 min a dull glass pigment was obtained with low luster. During the coating process the stirred suspension got a muddy appearance which indicates the formation of free TiO₂-particles, which were not attached to the pigment surface. Microscopic evaluation of the pigments confirmed, that very little of the TiO₂ was attached to the glass surface and the pigments which showed an interference effect had many cracks and an inhomogeneous coating.

### Comparative Example 4:

200 g flakes of standard E-glass without TiO₂ (thickness:1 µm ; diameter: 50-150 µm) were suspended in 2l of deionised water. With vigorous stirring the suspension was heated to 80 °C. After having adjusted the pH to 1.9 with dilute HCl a first layer of SnO₂ was precipitated onto the glass flakes by feeding a solution of 3 g SnCl4 x 5 H₂O (in 10 ml conc. HCl plus 50 ml of deionised water) into the suspension under simultaneous neutralization with 10% NaOH over a period of about 1 h. To complete the reaction the suspension was kept stirring for another 15 min. The coating was continued by adjusting the pH to 1.6 with dilute HCl. Afterwards 214 ml of a TiCl₄-Solution (400 gTicl₄/l deionised water) were titrated against 10% NaOH. Afterwards the coating procedure was stopped and the suspension was stirred for another 15 min, filtered, washed with deionised water and the filter cake is dried at 100 °C. After calcination at 750 °C for 30 min a dull glass pigment was obtained with a weak golden-red interference colour. The filtrate of the experiment was very milky, indicating the formation of free TiO₂-particles not attached to the surface of the pigment. Microscopic evaluation of the coated pigments confirmed that the pigments were coated with TiO₂, but the quality of the coating with respect to cracks and uniformity was very poor.

### Comparative Example 5:

The procedure of example 1 was repeated except that a C-glass without TiO₂ (thickness:1 µm ; diameter: 50-150 µm) was substituted for the modified E-glass. After the calcination procedure at 750 °C the pigment showed major agglomerations. Therefore the calcination was carried out at 600 °C and the obtained glass pigment showed a golden interference effect. Microscopic evaluation of the coated pigments confirms that the coating of example 1 and example 2 is much smoother and more homogeneous.

### Example 6:

The procedure of example 1 was repeated except that 250 ml of the TiCl₄-solution were added to the suspension. The further steps were again carried out as described in example 1. After calcination at 750 °C for 30 min a high gloss pearlescent glass pigment with a blue interference colour was obtained. The crystal structure of the TiO₂ was 100% rutile.

### Example 7:

200 g flakes of modified E-glass with a content of 5% TiO₂ (thickness:1 µm ; diameter: 50-150 µm) were suspended in 21 of deionised water. With vigorous stirring the suspension was heated to 80 °C. After having adjusted the pH to 3.0 with dilute HCl a FeCl₃-Solution (40% in deionised water) was titrated against 10% NaOH until the pigments showed a golden interference effect. Afterwards the coating procedure was stopped and the suspension was stirred for another 15 min, filtered, washed with deionised water and the filter cake is dried at 100 °C. After calcination at 750 °C for 30 min a high reflective pigment based on glass with a golden interference colour and an orange-red bulk colour was obtained.

### Example 8:

200 g flakes of modified E-glass with a content of 5% TiO₂ (thickness: 1 µm ; diameter: 50-150 µm) were suspended in 21 of deionised water. With vigorous stirring the suspension was heated to 80 °C. After having adjusted the pH to 1.9 with dilute HCl a first layer of SnO₂ was precipitated onto the glass flakes by feeding a solution of 3 g SnCl₄ x 5 H₂O (in 10 ml conc. HCl plus 50 ml of deionised water) into the suspension under simultaneous neutralization with 10% NaOH over a period of about 1 h. To complete the reaction the suspension was kept stirring for another 15 min. After having adjusted the pH to 1.6 with dilute HCl 185 ml of a TiCl₄₋solution (400 gTiCl₄/l) were slowly added to the reaction mixture while the pH was kept at a constant level by titrating with 10% NaOH. Afterwards the pH was raised to 7.5 by addition of 5% NaOH and the suspension was stirred for 15 min. Afterwards a solution of sodium silicate (207 g solution of sodium silicate, containing 27% SiO₂, mixed with 207 g of deionised water) was added slowly to the suspension while keeping the pH constant at 7.5 by adding 15% HCl. Afterwards the suspension was stirred for additional 20 min and then the pH is adjusted to 1.9 again by addition of 10% HCl. Afterwards a layer of SnO₂ was precipitated onto the SiO₂-layer by feeding a solution of 3 g of SnCl4 x 5 H₂O (in 10 ml conc. HCl plus 50 ml of deionised water) into the suspension under simultaneous neutralization with 10% NaOH over a period of about 1 h. To complete the reaction the suspension was kept stirring for another 15 min. The coating was continued by adjusting the pH to 1.6 with 10% HCl. Afterwards 189 ml of a TiCl₄-Solution (400 gTiCl₄/l deionised water) were titrated against 10% NaOH. At this point the coating procedure was stopped and the suspension was stirred for another 15 min, filtered, washed with deionised water and the filter cake was dried at 100 °C. After calcination at 750 °C for 30 min a pearlescent glass pigment with a superior gloss was obtained. The draw down reveals a colour flop of the pigment from a greenish interference colour for steep viewing angles to a bluish interference colour for flat viewing angles.

### Example 9:

200 g flakes of modified E-glass with a content of 5% TiO₂ (thickness: 1 µm ; diameter: 50-150 µm) were coated with a dense layer of silver by means of nonelectrode plating. Therefore a solution of AgNO₃, treated with aqueous NH₃, was added to a stirred suspension of the glass flakes. Afterwards a solution of D-glucose in water was added to the reaction mixture and the suspension was stirred for 2 h at 60 °C. The silver content of the final product was 20%. After isolation the product was dried at 250 °C and a high reflective silver coated glass flake was obtained.

### Example 10:

200 g of the coated glass flakes of example 6 were suspended in 2l of deionised water. With vigorous stirring the suspension was heated to 75 °C. After having adjusted the pH to 4.0 with dilute HCl a solution of 42.75 g FeCl₃ in 240 g of deionised water and a solution of 50.4 g of K₄[Fe(CN)₆)]· 3 H₂O in 240 g of deionised water were added simultaneously over a period of 4 h. During this addition the pH was kept at a constant level by adding 10% NaOH. To complete the reaction the suspension was kept stirring for another 15 min. The suspension was filtered, washed with deionised water and the filter cake was dried at 100 °C. A high reflective pigment with a bright blue interference colour and a blue bulk colour was obtained.

### Evaluation of the interference pigment quality

The luster and the colour of the coated pigments were evaluated visually using drawdown cards, half of which is black and half of which is white. A coating on the black part of this card displays the reflection colour and luster when it is examined speculary, while the coating on the white part displays the transmission colour when it is viewed at a flat angle. The drawdown s were prepared by incorporating 6% pigment in a nitrocellulose lacquer and applying this suspension to the card with a spiral bar.

### Results:

The draw downs show clearly the superior effects of the pigments obtained by example 1 and 2 in comparison the pigments obtained by the comparative examples 3-5 and to example 6. Although for all experiments the same amount of TiCl₄- solution was used, only examples 1 and 2 show already a red interference effect with high gloss and high colour purity. The colours of the comparative examples all are located before the red within the well known interference spiral. This means that effectively less of the TiCl₄ material was deposited effectively on the glass flakes to form a TiO₂ coating. Moreover, example 2 shows that glass flakes, having a content of titanium oxide, can be directly coated with TiO₂ without applying a SnO₂ layer between the glass flake surface and the TiO₂ layer. The pigments of example 2 showed a superior mechanical stability.

For comparative example 3 most of the precipitated TiO₂ lies beneath the flakes, which leads to a very dull and muddy performance of the pigments due to scattering of light. For comparative example 4 an interference effect can be detected, but the luster and colour purity in comparison to example 1 and example 2 is low. In addition the pigment shows a golden interference colour, which clearly indicates that the TiO₂ was not quantitatively precipitated onto the surface of the glassflake. In contrast, examples 1 and 2 already show a red interference effect, which means that a thicker TiO₂ layer was applied on the glassflake. The same is valid for example 5 which is based on C-glass and also shows only a golden interference colour.

During the normal coating process of a flaky substrate with TiO₂ the interference colour changes with increasing thickness of the TiO₂ layer as following: silver, gold, orange, red, violet, blue and green and then starting again with a golden interference colour of the next order. This leads to the conclusion that the TiO₂-layer of example 1 (based on modified E-glass) is thicker than the TiO₂-layer of examples 4 (based on standard E-glass) and 5 (based on C-glass). Therefore the adhesion of the precipitated TiO₂ to the surface of the pigment based on the new modified E-glass with a content of TiO₂ in the glass composition is clearly enhanced.

## Claims

1. An effect pigment comprising as a substrate a glass flake with a coating, said coating comprising at least one layer of at least one high refractive material, said material having a refractive index of at least 1.8,
**characterised in that**,
said glass flakes comprising the following composition:
50 - 65 wt.-% silicium oxide
10 - 18 wt.-% aluminium oxide
10 - 28 wt.-% calcium oxide
0.05 - 15 wt.-% titanium oxide, based on the weight of said glass flakes.

2. The effect pigment of claim 1, wherein said glass composition comprises a content of titanium oxide of at least 0.5 wt.-%, preferably at least 1 wt.-%, based on the weight of said glass flake.

3. The effect pigment of claim 1 or 2, wherein said glass composition comprises a content of titanium oxide of at least 2 wt.-%, preferably more than 4 wt.-%, based on the weight of said glass flake.

4. The effect pigment of any one claims 1 to 3, wherein said glass composition comprises a content of titanium oxide of at least 5 wt.-%, based on the weight of said glass flake.

5. The effect pigment of any one claims 1 to 4, wherein said glass composition comprises a content of 52 - 62 wt.-% of silicium oxide, preferably SiO₂, based on the weight of said glass flake.

6. The effect pigment of any one claims 1 to 5, wherein said glass composition comprises a content of 12 - 16 wt.-% of aluminium oxide, preferably Al₂O₃, based on the weight of said glass flake.

7. The effect pigment of any one claims 1 to 6, wherein said glass composition comprises a content of 18 - 25 wt.-% of calcium oxide, preferably CaO, based on the weight of said glass flake.

8. The effect pigment of any one claims 1 to 7, wherein said glass composition comprises the following further components:
0 to 3 wt.%, preferably 0 to 1 wt.-%, sodium oxide and potassium oxide, preferably Na₂O+K₂O,
0 to 6 wt.-%, preferably 1.0 to 3.0 wt.-%, magnesium oxide, preferably MgO,
0 to < 1 wt.-%, preferably 0 to 0.5 wt.-%, zinc oxide, preferably ZnO,
0 to 1 wt.-%, preferably 0.1 to 0.4 wt.-%, iron oxide, preferably FeO and/ orFe₂O₃.

9. The effect pigment of any one claims 1 to 8, wherein said glass composition has a softening point below 800 °C.

10. The effect pigment of any one claims 1 to 9, wherein said effect pigments comprise at least one layer of low refractive and at least one layer of high refractive index material.

11. The effect pigment of any one of the preceding claims, wherein said at least one layer of at least one high refractive material is selected from the group consisting of metal chalcogenides, particularly metal oxides, metal suboxides and metal sulfides, metal oxyhalides, metal nitrides, metal carbides, semitransparent metals and mixtures thereof.

12. The effect pigment of claim 11, wherein said at least one layer of at least one high refractive material is selected from the group of metal oxides consisting of titanium dioxide, iron oxide, chromium oxide, copper oxide, zinc oxide, tin oxide, vanadium oxide, cobalt oxide, nickel oxide, antimony oxide, lead oxide, silver oxide, molybdenum oxide, tungsten oxide, zirconium oxide, suboxides and mixtures thereof.

13. The effect pigment of any one of the preceding claims, wherein tin oxide and/or aluminium oxide is coated between said glass flakes and a subsequent layer of high refractive material.

14. The effect pigment of claim 11, wherein said high refractive material is selected from the group of metal sulfides consisting of titanium sulfide, iron sulfide, chromium sulfide, copper sulfide, zinc sulfide, tin sulfide, vanadium sulfide, cobalt sulfide, antimony sulfide, lead sulfide, silver sulfide, molybdenum sulfide, tungsten sulfide, zirconium sulfide, subsulfides and mixtures thereof.

15. The effect pigment of claim 10, wherein said at least one layer of low refractive material is selected from the group consisting of low refractive metal oxides, particularly of silica, silica hydrate, silicon oxide hydroxide, silicon oxide hydroxide hydrate, alumina, alumina hydrate, aluminium oxide hydroxide, aluminium oxide hydroxide hydrate, and mixtures thereof.

16. The effect pigment of any one of preceding claims, wherein said glass flakes are coated with one or more layers of metal oxide selected from the group consisting of TiO₂, Fe₂O₃ and mixtures thereof.

17. The effect pigment of any one of preceding claims, wherein the high refractive material is titanium dioxide in the rutile modification.

18. A use of effect pigments of any one of claims 1 to 17 in plastics, coatings, powder coatings, paints, inks, printing inks, glasses, ceramics, agriculture foils, cosmetics, tattoo formulations, and foods.

19. A use of glass comprising the following compounds
50 - 65 wt.-% silicium oxide
10 - 18 wt.-% aluminium oxide
10 - 28 wt.-% calcium oxide
0.05 - 15 wt.-% titanium oxide, based on the weight of said glass,
as a substrate for effect pigments.

20. The use of claim 19 wherein the glass further comprises
0 to 3 wt.-%, preferably 0 to 1 wt.-%, sodium oxide and potassium oxide, preferably Na₂O+K₂O,
0 to 6 wt.-%, preferably 1.0 to 3.0 wt.-% magnesium oxide, preferably MgO,
0 to < 1 wt.-%, preferably 0 to 0.5 wt.-% zinc oxide, preferably ZnO,
0 to 1 wt.-%, preferably 0.1 to 0.4 wt.-% iron oxide, preferably FeO and/orFe₂O₃, based on the weight of said glass.

21. Formulations and preparations containing the effect pigments of any one of claims 1 to 17.

22. A method of producing an effect pigment of any one of claims 1 to 17, comprising the steps:
(a) coating glass flakes comprising the following composition:
50 - 65 wt.-% silicium oxide
10 - 18 wt.-% aluminium oxide
10 - 28 wt.-% calcium oxide
0.05 - 15 wt.-% titanium oxide, based on the weight of said glass flakes, with at least one layer of high refractive material, said material having a refractive index of at least 1,8,
(b) optionally calcining said layered glass flakes obtained by step (a).

23. The method of claim 22, wherein said glass flakes are coated with at least one layer of a high refractive material by wet chemical coating, physical vapour deposition, chemical vapour deposition, or electroless plating.

## Patentansprüche

1. Effektpigment, umfassend als Substrat eine Glasschuppe mit einem Überzug, wobei der Überzug mindestens eine Schicht von mindestens einem hochbrechenden Material umfasst, wobei das Material einen Brechungsindex von mindestens 1,8 aufweist, **dadurch gekennzeichnet, dass** die Glasschuppen die folgende Zusammensetzung umfassen:
50-65 Gew.-% Siliciumoxid,
10-18 Gew.-% Aluminiumoxid,
10-28 Gew.-% Calciumoxid und
0,05-15 Gew.-% Titanoxid, bezogen auf das Gewicht der Glasschuppen.

2. Effektpigment nach Anspruch 1, wobei die Glaszusammensetzung einen Gehalt an Titanoxid von mindestens 0,5 Gew.-% und vorzugsweise von mindestens 1 Gew.-%, bezogen auf das Gewicht der Glasschuppe, umfasst.

3. Effektpigment nach Anspruch 1 oder 2, wobei die Glaszusammensetzung einen Gehalt an Titanoxid von mindestens 2 Gew.-% und vorzugsweise von mehr als 4 Gew.-%, bezogen auf das Gewicht der Glasschuppe, umfasst.

4. Effektpigment nach einem der Ansprüche 1 bis 3, wobei die Glaszusammensetzung einen Gehalt an Titanoxid von mindestens 5 Gew.-%, bezogen auf das Gewicht der Glasschuppe, umfasst.

5. Effektpigment nach einem der Ansprüche 1 bis 4, wobei die Glaszusammensetzung einen Gehalt an 52-62 Gew.-% Siliciumoxid, vorzugsweise SiO₂, bezogen auf das Gewicht der Glasschuppe, umfasst.

6. Effektpigment nach einem der Ansprüche 1 bis 5, wobei die Glaszusammensetzung einen Gehalt an 12-16 Gew.-% Aluminiumoxid, vorzugsweise Al₂O₃, bezogen auf das Gewicht der Glasschuppe, umfasst.

7. Effektpigment nach einem der Ansprüche 1 bis 6, wobei die Glaszusammensetzung einen Gehalt an 18-25 Gew.-% Calciumoxid, vorzugsweise CaO, bezogen auf das Gewicht der Glasschuppe, umfasst.

8. Effektpigment nach einem der Ansprüche 1 bis 7, wobei die Glaszusammensetzung die folgenden weiteren Bestandteile umfasst:
0 bis 3 Gew.-%, vorzugsweise 0 bis 1 Gew.-%, Natriumoxid und Kaliumoxid, vorzugsweise Na₂O+K₂O,
0 bis 6 Gew.-%, vorzugsweise 1,0 bis 3,0 Gew.-%, Magnesiumoxid, vorzugsweise MgO,
0 bis <1 Gew.-%, vorzugsweise 0 bis 0,5 Gew.-%, Zinkoxid, vorzugsweise ZnO, und
0 bis 1 Gew.-%, vorzugsweise 0,1 bis 0,4 Gew.-%, Eisenoxid, vorzugsweise FeO und/oder Fe₂O₃.

9. Effektpigment nach einem der Ansprüche 1 bis 8, wobei die Glaszusammensetzung einen Erweichungspunkt unter 800 °C aufweist.

10. Effektpigment nach einem der Ansprüche 1 bis 9, wobei die Effektpigmente mindestens eine Schicht aus einem Material mit geringem Brechungsindex und mindestens eine Schicht aus einem Material mit hohem Brechungsindex umfassen.

11. Effektpigment nach einem der vorstehenden Ansprüche, wobei die mindestens eine Schicht aus mindestens einem Material mit hohem Brechungsindex aus der Gruppe ausgewählt ist, die aus Metallchalcogeniden, insbesondere Metalloxiden, Metallsuboxiden und Metallsulfiden, Metalloxyhalogeniden, Metallnitriden, Metallcarbiden, halbdurchsichtigen Metallen und Gemischen davon besteht.

12. Effektpigment nach Anspruch 11, wobei die mindestens eine Schicht aus mindestens einem Material mit hohem Brechungsindex aus der Gruppe ausgewählt ist, die aus Metalloxiden ausgewählt ist, die aus Titandioxid, Eisenoxid, Chromoxid, Kupferoxid, Zinkoxid, Zinnoxid, Vanadiumoxid, Cobaltoxid, Nickeloxid, Antimonoxid, Bleioxid, Silberoxid, Molybdänoxid, Wolframoxid, Zirkoniumoxid, Suboxiden und Gemischen davon besteht.

13. Effektpigment nach einem der vorstehenden Ansprüche, wobei Zinnoxid und/oder Aluminiumoxid als Schicht zwischen Glasschuppen und einer anschließenden Schicht aus hochbrechendem Material aufgebracht sind.

14. Effektpigment nach Anspruch 11, wobei das hochbrechende Material aus der Gruppe von Metallsulfiden ausgewählt ist, die aus Titansulfid, Eisensulfid, Chromsulfid, Kupfersulfid, Zinksulfid, Zinnsulfid, Vanadiumsulfid, Cobaltsulfid, Antimonsulfid, Bleisulfid, Silbersulfid, Molybdänsulfid, Wolframsulfid, Zirkoniumsulfid, Subsulfiden und Gemischen davon besteht.

15. Effektpigment nach Anspruch 10, wobei die mindestens eine Schicht aus einem Material mit niedrigem Brechungsindex aus der Gruppe ausgewählt ist, die aus niedrigbrechenden Metalloxiden, insbesondere Siliciumdioxid, Siliciumdioxid-hydrat, Siliciumoxidhydroxid, Siliciumoxidhydroxid-hydrat, Aluminiumoxid, Aluminiumoxid-hydrat, Aluminiumoxidhydroxid, Aluminiumoxidhydroxid-hydrat und Gemischen davon besteht.

16. Effektpigment nach einem der vorstehenden Ansprüche, wobei die Glasschuppen mit einer oder mehreren Schichten aus Metalloxid beschichtet sind, das aus der Gruppe ausgewählt ist, die aus TiO₂ Fe₂O₃ und Gemischen davon besteht.

17. Effektpigment nach einem der vorstehenden Ansprüche, wobei es sich bei dem hochbrechenden Material um Titandioxid in der Rutil-Modifikation handelt.

18. Verwendung von Effektpigmenten nach einem der Ansprüche 1 bis 17 in Kunststoffen, Beschichtungen, Pulverbeschichtungen, Anstrichmitteln, Tinten, Druckfarben, Gläsern, keramischen Materialien, landwirtschaftlichen Folien, Kosmetika, Tattoo-Zubereitungen und Nahrungsmitteln.

19. Verwendung eines Glases, das die folgenden Verbindungen umfasst:
50-65 Gew.-% Siliciumoxid,
10-18 Gew.-% Aluminiumoxid,
10-28 Gew.-% Calciumoxid und
0,05-15 Gew.-% Titanoxid, bezogen auf das Gewicht des Glases, als ein Substrat für Effektpigmente.

20. Verwendung nach Anspruch 19, wobei das Glas ferner
0 bis 3 Gew.-%, vorzugsweise 0 bis 1 Gew.-%, Natriumoxid und Kaliumoxid, vorzugsweise Na₂O+K₂O,
0 bis 6 Gew.-%, vorzugsweise 1,0 bis 3,0 Gew.-%, Magnesiumoxid, vorzugsweise MgO,
0 bis <1 Gew.-%, vorzugsweise 0 bis 0,5 Gew.-%, Zinkoxid, vorzugsweise ZnO,
0 bis 1 Gew.-%, vorzugsweise 0,1 bis 0,4 Gew.-%, Eisenoxid, vorzugsweise FeO und/oder Fe₂O₃, bezogen auf das Gewicht des Glases,
umfasst.

21. Zubereitungen und Präparate, die die Effektpigmente nach einem der Ansprüche 1 bis 17 enthalten.

22. Verfahren zur Herstellung eines Effektpigments nach einem der Ansprüche 1 bis 17, umfassend die folgenden Stufen:
(a) Beschichten von Glasschuppen, die die folgende Zusammensetzung umfassen:
50-65 Gew.-% Siliciumoxid,
10-18 Gew.-% Aluminiumoxid,
10-28 Gew.-% Calciumoxid und
0,05-15 Gew.-% Titanoxid, bezogen auf das Gewicht der Glasschuppen,
mit mindestens einer Schicht aus einem hochbrechenden Material, wobei das Material einen Brechungsindex von mindestens 1,8 aufweist.,
(b) gegebenenfalls Calcinieren der in Stufe (a) erhaltenen beschichteten Glasschuppen.

23. Verfahren nach Anspruch 22, wobei die Glasschuppen mit mindestens einer Schicht aus einem hochbrechenden Material durch chemische Nassbeschichtung, physikalische Dampfabscheidung, chemische Dampfabscheidung oder stromfreies Plattieren beschichtet werden.

## Revendications

1. Pigment à effet comprenant, comme substrat, des flocons de verre avec un revêtement, ledit revêtement comprenant au moins une couche d'au moins une matière très réfractive, ladite matière ayant un indice de réfraction d'au moins 1,8,
**caractérisé en ce que**
lesdits flocons de verre comprennent la composition suivante :
50 à 65 % en poids d'oxyde de silicium
10 à 18 % en poids d'oxyde d'aluminium
10 à 28 % en poids d'oxyde de calcium
0,05 à 15 % en poids d'oxyde de titane, par rapport au poids desdits flocons de verre.

2. Pigment à effet selon la revendication 1, dans lequel ladite composition de verre comprend une teneur en oxyde de titane d'au moins 0,5 % en poids, de préférence d'au moins 1 % en poids, par rapport au poids desdits flocons de verre.

3. Pigment à effet selon la revendication 1 ou 2, dans lequel ladite composition de verre comprend une teneur en oxyde de titane d'au moins 2 % en poids, de préférence de plus de 4 % en poids, par rapport au poids desdits flocons de verre.

4. Pigment à effet selon l'une quelconque des revendications 1 à 3, dans lequel ladite composition de verre comprend une teneur en oxyde de titane d'au moins 5 % en poids par rapport au poids desdits flocons de verre.

5. Pigment à effet selon l'une quelconque des revendications 1 à 4, dans lequel ladite composition de verre comprend une teneur de 52 à 62 % en poids d'oxyde de silicium, de préférence de SiO₂, par rapport au poids desdits flocons de verre.

6. Pigment à effet selon l'une quelconque des revendications 1 à 5, dans lequel ladite composition de verre comprend une teneur de 12 à 16 % en poids d'oxyde d'aluminium, de préférence de Al₂O₃, par rapport au poids desdits flocons de verre.

7. Pigment à effet selon l'une quelconque des revendications 1 à 6, dans lequel ladite composition de verre comprend une teneur de 18 à 25 % en poids d'oxyde de calcium, de préférence de CaO, par rapport au poids desdits flocons de verre.

8. Pigment à effet selon l'une quelconque des revendications 1 à 7, dans lequel ladite composition de verre comprend les composants supplémentaires suivants :
0 à 3 % en poids, de préférence 0 à 1 % en poids, d'oxyde de sodium et d'oxyde de potassium, de préférence Na₂O + K₂O,
0 à 6 % en poids, de préférence 1,0 à 3,0 % en poids d'oxyde de magnésium, de préférence MgO,
0 à < 1 % en poids, de préférence 0 à 0,5 % en poids d'oxyde de zinc, de préférence ZnO,
0 à 1 % en poids, de préférence 0,1 à 0,4 % en poids d'oxyde de fer, de préférence FeO et/ou Fe₂O₃.

9. Pigment à effet selon l'une quelconque des revendications 1 à 8, dans lequel ladite composition de verre a un point de ramollissement inférieur à 800 °C.

10. Pigment à effet selon l'une quelconque des revendications 1 à 9, dans lequel lesdits pigments à effet comprennent au moins une couche d'une matière ayant un faible indice de réfraction et au moins une couche d'une matière ayant un indice de réfraction élevé.

11. Pigment à effet selon l'une quelconque des revendications précédentes, dans lequel ladite couche, au nombre d'au moins une, d'au moins une matière très réfractive est choisie dans l'ensemble constitué des chalcogénures de métaux, en particulier des oxydes de métaux, des sous-oxydes de métaux et des sulfures de métaux, des oxyhalogénures de métaux, des nitrures de métaux, des carbures de métaux, des métaux semi-transparents et des mélanges de ceux-ci.

12. Pigment à effet selon la revendication 11, dans lequel ladite couche, au nombre d'au moins une, d'au moins une matière très réfractive est choisie dans l'ensemble constitué d'oxydes de métaux constitué de dioxyde de titane, oxyde de fer, oxyde de chrome, oxyde de cuivre, oxyde de zinc, oxyde d'étain, oxyde de vanadium, oxyde de cobalt, oxyde de nickel, oxyde d'antimoine, oxyde de plomb, oxyde d'argent, oxyde de molybdène, oxyde de tungstène, oxyde de zirconium, sous-oxydes et mélanges de ceux-ci.

13. Pigment à effet selon l'une quelconque des revendications précédentes, dans lequel l'oxyde d'étain et/ou l'oxyde d'aluminium est/sont appliqué(s) entre lesdits flocons de verre et une couche suivante d'une matière très réfractive.

14. Pigment à effet selon la revendication 11, dans lequel la matière très réfractive est choisie dans l'ensemble des sulfures de métaux constitué de sulfure de titane, sulfure de fer, sulfure de chrome, sulfure de cuivre, sulfure de zinc, sulfure d'étain, sulfure de vanadium, sulfure de cobalt, sulfure d'antimoine, sulfure de plomb, sulfure d'argent, sulfure de molybdène, sulfure de tungstène, sulfure de zirconium, sous-sulfures et mélanges de ceux-ci.

15. Pigment à effet selon la revendication 10, dans lequel ladite couche, au nombre d'au moins une, de matière peu réfractive est choisie dans l'ensemble constitué d'oxydes de métaux peu réfractifs, en particulier de silice, d'hydrate de silice, d'hydroxyde d'oxyde de silicium, d'hydrate d'hydroxyde d'oxyde de silicium, d'alumine, d'hydrate d'alumine, d'hydroxyde d'oxyde d'aluminium, d'hydrate d'hydroxyde d'oxyde d'aluminium et de mélanges de ceux-ci.

16. Pigment à effet selon l'une quelconque des revendications précédentes, dans lequel lesdits flocons de verre sont revêtus d'une ou plusieurs couches d'un oxyde de métal choisi dans l'ensemble constitué de TiO₂, Fe₂O₃ et de mélanges de ceux-ci.

17. Pigment à effet selon l'une quelconque des revendications précédentes, dans lequel la matière très réfractive est du dioxyde de titane de variété rutile.

18. Utilisation de pigments à effet selon l'une quelconque des revendications 1 à 17 dans des matières plastiques, des revêtements, des revêtements en poudre, des peintures, des encres, des encres d'imprimerie, des verres, des céramiques, des feuilles en agriculture, des cosmétiques, des formulations pour tatouages et des aliments.

19. Utilisation de verre comprenant les composés suivants :
50 à 65 % en poids d'oxyde de silicium
10 à 18 % en poids d'oxyde d'aluminium
10 à 28 % en poids d'oxyde de calcium
0,05 à 15 % en poids d'oxyde de titane, par rapport au poids dudit verre,
en tant que substrat pour des pigments à effet.

20. Utilisation selon la revendication 19, dans laquelle le verre comprend en outre
0 à 3 % en poids, de préférence 0 à 1 % en poids, d'oxyde de sodium et d'oxyde de potassium, de préférence Na₂O + K₂O,
0 à 6 % en poids, de préférence 1,0 à 3,0 % en poids d'oxyde de magnésium, de préférence MgO,
0 à < 1 % en poids, de préférence 0 à 0,5 % en poids d'oxyde de zinc, de préférence ZnO,
0 à 1 % en poids, de préférence 0,1 à 0,4 % en poids d'oxyde de fer, de préférence FeO et/ou Fe₂O₃, par rapport au poids dudit verre.

21. Formulations et préparations contenant les pigments à effet selon l'une quelconque des revendications 1 à 17.

22. Procédé de préparation d'un pigment à effet selon l'une quelconque des revendications 1 à 17, comprenant les étapes consistant à :
(a) revêtir des flocons de verre comprenant la composition suivante :
50 à 65 % en poids d'oxyde de silicium
10 à 18 % en poids d'oxyde d'aluminium
10 à 28 % en poids d'oxyde de calcium
0,05 à 15 % en poids d'oxyde de titane, par rapport au poids desdits flocons de verre, avec au moins une couche d'une matière très réfractive, ladite matière ayant un indice de réfraction d'au moins 1,8,
(b) éventuellement calciner lesdits flocons de verre revêtus obtenus au moyen de l'étape (a).

23. Procédé selon la revendication 22, dans lequel lesdits flocons de verre sont revêtus d'au moins une couche d'une matière très réfractive par revêtement chimique par voie humide, dépôt physique en phase vapeur, dépôt chimique en phase vapeur ou dépôt autocatalytique.
